# EUROPEAN PATENT SPECIFICATION

(11) **EP 4 374 190 B1**
(45) Date of publication and mention of the grant of the patent: **04.11.2026**
(21) Application number: 21847765.1
(22) Date of filing: 17.12.2021
(51) Int. Cl.: G01S 7/48, B60W 40/06, G01N 21/47, G01N 21/55, G01S 7/481

(54) **OPTICAL BEAM COMBINER ROAD CONDITION SENSOR**
STRASSENZUSTANDSSENSOR MIT OPTISCHEM STRAHLVEREINIGER
CAPTEUR D'ÉTAT DES ROUTES À COMBINEUR DE FAISCEAUX OPTIQUES

(30) Priority: 10.12.2021 PT 2021117628
(43) Date of publication of application: 29.05.2024
(73) Proprietor: Bosch Car Multimedia Portugal, S.A., 4705-820 Braga (PT); Universidade do Minho, 4700-320 Braga (PT)
(72) Inventor: MONTEIRO PEREIRA, André Agostinho, 4600-648 AMARANTE (PT); COSTA CERQUIDO, Mónica Catarina, 4905-130 PALME (PT); ANTUNES DE CARVALHO ALBUQUERQUE, André, 4705-651 VILAÇA (PT); GONÇALVES DE SOUSA MARQUES DE CARVALHO, João A., 2532 PORTO (PT)
(74) Representative: Couto, Cláudia
(86) International application number: PCT/IB2021/061940
(87) International publication number: WO 2023/105276

(56) References cited:
- EP-A1- 2 597 454
- WO-A1-2021/235091
- JP-A- 2006 046 936
- US-B1- 9 620 933
- OTT DANIEL ET AL: "Scaling the spectral beam combining channels in a multiplexed volume Bragg grating", OPTICS EXPRESS, vol. 21, no. 24, 22 November 2013 (2013-11-22), pages 29620 - 29627, XP055938684, ISSN: 1094-4087, DOI: 10.1364/OE.21.029620

## Description

### Technical Field

The present application describes a device to combine light beam sources of optical sensors for the determination of road states.

### Background art

Optical Road Condition Sensors (oRCS) in automotive applications determine the condition of the road by using one or more light sources that shine upon the surface of the road, and one or more light detectors that capture the diffused and/or reflected light. The light detectors measure the polarization and/or spectral characteristics of the captured light, which encode the information of the road state. The measured characteristics are then fed into classification algorithms that return the sensed road condition, with the possibility of additional support algorithms to calculate parameters like water layer thickness. In summary, an oRCS consists of the following subsystems:
- Light sources - usually a number of pulsed lasers with complementary wavelengths (edge-emitting, distributed Bragg reflector, distributed feedback laser Diodes, VCSELs or Fiber lasers), but continuous wave lasers or even broadband sources can be used as well, depending on the optical and detector systems.
- Optical system - shapes the emissions from the light sources and determines how the light is collected into the receiver subsystem. For example, it can combine the beams from different light sources and set a specific divergence angle on the emission side, and on the receiver side, a single receiving lens can focus the collected light into the photodetector. Additional polarizers and filters can also be included here.
- Photodetector - generates an electrical signal when illuminated by signals whose wavelengths it can sense.
- Data Processing and Control System - controls the light source system, reads and processes signals from the photodetector and sends this information to other interfaced devices;
- Housing and Chassis - it is a mechanical support for all the sub-systems. This component keeps all the parts in the correct position and controls the thermal and vibrational conditions of the entire sensor. This subsystem includes cleaning systems.

In general, the oRCS sensor exhibits higher accuracy if the light sources are perfectly aligned, such that any change in optical path affects all of them equally. Currently, several general beam-combining techniques are available, and can be split into three main groups:
- Reflective
   - Knife-edge prisms: Independent of wavelength, polarization angle and divergence. Simple and cheap but impossible to achieve true uniaxial emission. Hard to scale.
- Refractive
   - Prisms: simple and cheap system, with limited angular separation between wavelengths and efficiency dependent on polarization. Moderately hard to scale. Usually employed in beam-splitting, not combining.
   - Beam splitters: hard to scale, with decreasing efficiency, and increasing size and price. Simple to design, but inefficient.
   - Dichroic mirrors: like beam splitters, this system is hard to scale, quickly becoming too large and expensive. Simple to design and efficient, although the increase in efficiency comes at the cost of expensive mirror coatings, which become more complex with scale.
   - Polarizing combiners: Similar to the previous two methods, but only combine beams of different polarization. Works well for two beams, but very hard to scale without performance and/or polarization output issues.
- Diffractive
   - Diffraction gratings: decent angular separation of wavelengths, whose range and spacing can be tailored to application. Cheap and reasonably easy to scale. Can create secondary beams, which reduce efficiency and increase stray light. Usually used for beam splitting.
   - Volume Bragg gratings: fully customizable for desired wavelengths and angular separation. Cheap to produce, with possible designs for operation in transmission and reflection, as well as multiplexing capabilities. Narrow reflectivity profile and higher-order reflections can cause issues, but these are the most promising for small automotive sensors.
   - Beam steering/shaping: Lattice designs are similar in performance to knife-edge prisms, with better scalability and easier alignment, while featuring selectivity on wavelength or angle. Uniform designs can work in conjunction with or replace a lens to compensate for dispersion. This property can also be exploited for beam combining, resulting in a system with the layout of a prism-based design but with the efficiency of a blazed grating. Easy to manufacture and cheap to produce, these generic DOEs are not typically used in this application.

Reflective and refractive solutions have been extensively used in the past for the purpose of beam combining, whereas diffractive techniques, are still quite unexplored. Dichroic mirrors and beam splitters are the most common beam-combining techniques, but the nature of an automotive sensor discourages their use. Despite being more adequate, knife-edge prisms, refractive prisms and polarizing combiners still suffer from a number of limitations, especially scaling, size and performance issues. Indeed, currently there is no adequate method to combine the emission from different laser sources in an automotive road condition sensor. Thus, and considering the drawbacks of the present state of the art regarding these sensors, the present invention makes use of different techniques and devices to overcome these issues. Optical road condition sensors are described in JP 2006 046936 A, WO 2021/235091 A1 and EP 2 597 454 A1. Optical beam combiners based on volume Bragg gratings are described in US 9 620 933 B1 and Ott Daniel et al. "Scaling the spectral beam combining channels in a multiplexed volume Bragg grating" optics express, vol. 21, no. 24.

### Summary

The invention is defined by independent claim 1. The present invention describes an optical beam combiner road condition sensor comprising a set of laser emitting diodes, configured to emit corresponding independent laser beams; and a MVBG, arranged inside of an enclosure along with the set of laser emitting diodes; characterized by the emitted laser beams being oriented so as to focus on a central position of the MVBG, which will promote the reflection of an MVBG combined output laser beam (15) towards a shaping element which is adapted to channel a resulting shaped combined beam towards an existing target outside of the enclosure.

In a proposed embodiment of present invention, the optical beam combiner road condition sensor comprises a support frame with high thermal conductivity characteristics through which the set of laser emitting diodes are supported.

Yet in another proposed embodiment of present invention, the optical beam combiner road condition sensor comprises a thermal system configured to maintain the temperature of the support frame at a constant and stable value.

Yet in another proposed embodiment of present invention, the support frame is mechanically connected to sensor housing, which is connected to a PCB.

Yet in another proposed embodiment of present invention, the set of laser emitting diodes are arranged along one or more than one lateral support frames.

According to the present invention, the shaped combined beam is channeled outside of the enclosure towards a target, said target being a road, in order to determine the road environmental conditions.

Yet in another proposed embodiment of present invention, the MVBG is positioned inside the enclosure in a perpendicular position or in a parallel position with regard to the location of the support frame.

Yet in another proposed embodiment of present invention, the shaping element is positioned inside of the enclosure in in a perpendicular position or in a parallel position with regard to the location of the MVBG, or embedded in the sensor housing.

### General Description

The present application describes a device to combine light beam sources of optical sensors for the determination of road states.

In this invention, it is proposed a new approach for this type of road condition sensing, resorting to the use of multiplexed volume Bragg gratings, or MVBGs. In this invention disclosure it is presented spectral beam-combining architectures based on Multiplexed Volume Bragg Gratings (MVBGs), also known as Moiré volume Bragg gratings, used successfully to this end due to their low footprint, price, reliability, performance and ease of assembly.

In general, volume Bragg gratings are a particular type of diffraction gratings in which the periodic modulation of the refractive index occurs throughout the entire volume of the material. Such devices enable to reflect or transmit light at only a certain wavelength to a specific angle depending on the grating parameters (grating tilt angle, refractive index and grating period). MVBGs can be seen as multiple volume Bragg gratings in a single device, in which the modulation of the refractive index inside the material corresponds to the superposition of the periodic modulation of the refractive index or a single volume Bragg grating. Hence, MVBGs can be designed to transmit/reflect light at different wavelengths and/or different angles of incidence and orientation to the same output angle. This is the main principle of operation behind the beam combiner using MVBGs. When compared to previous state of the art technologies, the herein proposed architecture of the beam combiner device, in terms of advantages allows to lower the optical power losses, obtain a truly uniaxial emission laser beam through the elimination of geometric effects due to different emission locations, obtain an in-plane PCB compatibility configuration, and ease the alignment of the multiple laser beams at different wavelengths into a single output beam compared to current methods at moderate scale and above. The easy, but yet sturdy and customizable assembly, allows to obtain a robust operation with design flexibility to employ transmission or reflection optical components, enabling high-power designs using low-power components, broad-band designs using discrete wavelengths and multiple-polarization designs.

Any device that requires the combined emission of several light beam sources, not just several wavelengths, into a single uniaxial output light beam can use the proposed solution. As previously mentioned, the optical road condition sensor according to the claimed subject-matter is one example of such a device, but other next-generation sensors not encompasssed by the claimed subject-matter using lasers as light sources (e.g., LiDARs) with more than one wavelength or polarization states or even higher power can also use this technology.

In some of the proposed embodiments described below, in a non-limiting manner, the disclosed device is implemented in a cubic shaped enclosure composed by a set of support frames, in which a set of four laser emitting diodes are installed, in a two-by-two arrangement along the same lateral side surface, each two-by-two arrangement placed in opposite lateral surfaces of the enclosure. The positioning of the laser emitting diodes may also be in only one of the lateral side faces of the referred support frame. The emitting diodes will be installed and embedded in the surfaces of the lateral support frames so that their light beam is emitted to the inside of the enclosure upon a central point of the Multiplexed Volume Bragg Grating, which will be installed in a perpendicular position in relation to the diode installation positioning surface, in an internal upper surface of the enclosure, or in an internal side surface of the enclosure. The enclosure is side and top surrounded by support frames. Additionally, on the upper surface, the enclosure comprises the use of a thermal system, and on the bottom surface a sensor housing is used to promote the connection with a printed circuit board. The MVBG combined output laser beam, resulting from the combination of the laser beams emitted by the laser emitting diodes will be channeled to a shaping element. This shaping element is positioned on a opposite surface with regard to the MVBG, and correctly aligned with the resulting MVBG combined output laser beam, in order to weave, reshape, or perform other changes such as increasing its divergence and directing it towards the region of interest on the road.

### Brief description of the drawings

For better understanding of the present application, figures representing preferred embodiments are herein attached which, however, are not intended to limit the technique disclosed herein.
Fig. 1 - illustrates an overview of the fundamentals of the invention, wherein the reference numbers relate to:
   10 - Multiplexed Volume Bragg Grating (MVBG);
   11 - laser beam A;
   12 - laser beam B;
   13 - laser beam C;
   14 - laser beam D;
   15 - MVBG combined output laser beam;
   20 - shaping element;
   23 - shaped combined beam.
Fig. 2 - illustrates how the laser beams are reflected and combined together by the MVBG in a uniaxial way, wherein the reference numbers refer to:
   10 - Multiplexed Volume Bragg Grating (MVBG);
   11 - laser beam A;
   12 - laser beam B;
   13 - laser beam C;
   14 - laser beam D;
   15 - MVBG combined output laser beam.
   Here, in the structure of an MVBG (10), is possible to visualize the gratings oriented in specific directions to reflect the desired light source. The gratings are color-coded to the corresponding source. In this image example, the different pitches of each grating indicate each source has a distinct wavelength.

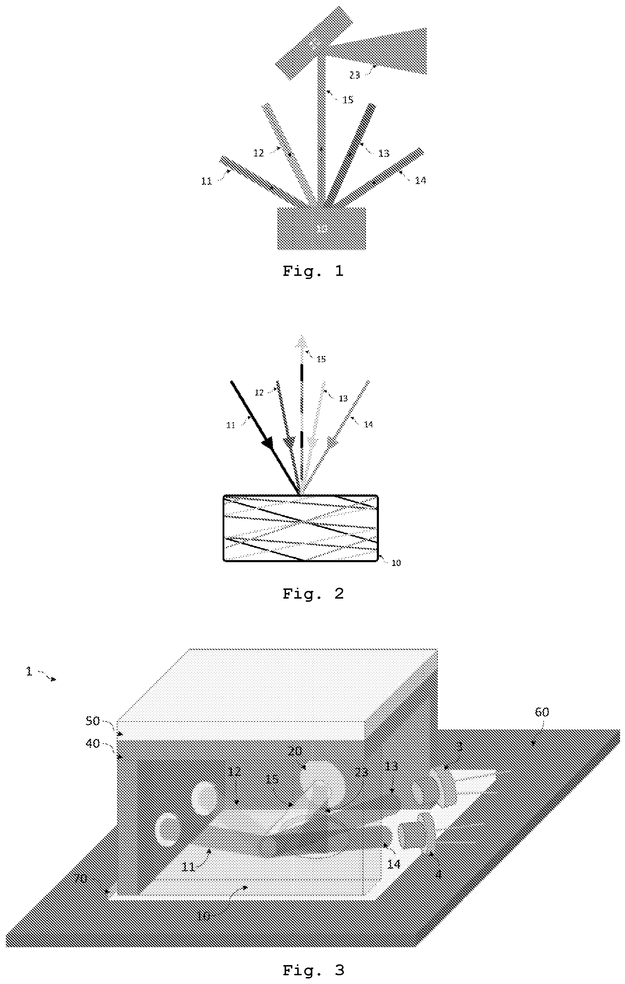

Fig. 3 - illustrates the structure of the proposed device in one of the proposed embodiments of the invention, wherein the reference numbers refer to:
   1 - device / optical beam combiner road condition sensor;
   3 - laser emitting diode C;
   4 - laser emitting diode D;
   10 - Multiplexed Volume Bragg Grating (MVBG);
   11 - laser beam A;
   12 - laser beam B;
   13 - laser beam C;
   14 - laser beam D;
   15 - MVBG combined output laser beam;
   20 - shaping element;
   23 - shaped combined beam;
   40 - support frame;
   50 - thermal system;
   60 - printed circuit board (PCB);
   70 - sensor housing.

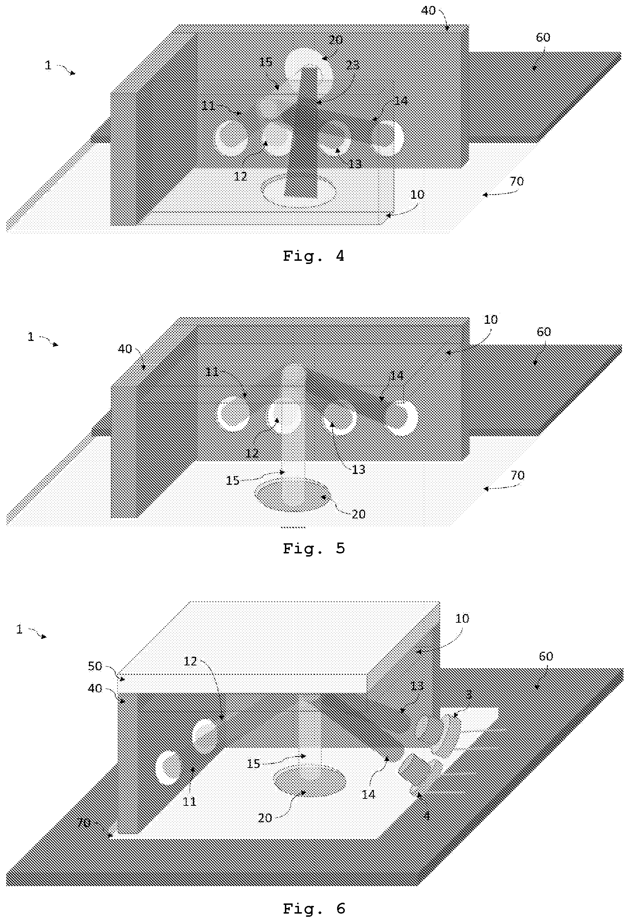

Fig. 4 - illustrates the structure of the proposed device in another of the proposed embodiments of the invention, wherein the reference numbers refer to:
   1 - device / optical beam combiner road condition sensor;
   10 - Multiplexed Volume Bragg Grating (MVBG);
   11 - laser beam A;
   12 - laser beam B;
   13 - laser beam C;
   14 - laser beam D;
   15 - MVBG combined output laser beam;
   20 - shaping element;
   23 - shaped combined beam;
   40 - support frame;
   60 - printed circuit board (PCB);
   70 - sensor housing.
Fig. 5 - illustrates the structure of the proposed device in another of the proposed embodiments of the invention, wherein the reference numbers refer to:
   1 - device / optical beam combiner road condition sensor;
   10 - Multiplexed Volume Bragg Grating (MVBG);
   11 - laser beam A;
   12 - laser beam B;
   13 - laser beam C;
   14 - laser beam D;
   15 - MVBG combined output laser beam;
   20 - shaping element;
   40 - support frame;
   60 - printed circuit board (PCB);
   70 - sensor housing.
Fig. 6 - illustrates the structure of the proposed device in another of the proposed embodiments of the invention, wherein the reference numbers refer to:
   1 - device / optical beam combiner road condition sensor;
   3 - laser emitting diode C;
   4 - laser emitting diode D;
   10 - Multiplexed Volume Bragg Grating (MVBG);
   11 - laser beam A;
   12 - laser beam B;
   13 - laser beam C;
   14 - laser beam D;
   15 - MVBG combined output laser beam;
   20 - shaping element;
   40 - support frame;
   50 - thermal system;
   60 - printed circuit board (PCB);
   70 - sensor housing.

### Description of Embodiments

With reference to the figures, some embodiments are now described in more detail, which are however not intended to limit the scope of the present application.

A particular embodiment of the current invention is disclosed on Figure 1, which discloses the operational fundamentals of the oRCS MVBG beam/laser combiner. A number of light sources, here represented by four emitted collimated lasers, laser A (11), laser B (12), laser C (13) and laser D (14), shines upon a fixed central position of the MVBG (10) from different directions above its surface. For all the described embodiments of the invention it is assumed a total number of four lasers sources, but the invention in a non-limiting way is also valid for any other number of laser sources.

The microstructure of MVBG (10), as depicted in Figure 2, is a superposition of standard VBG (Volume Bragg Grating) with distinct pitch and orientation, in such a way that only a specific Bragg vector is available for each one source. In this way, the reflection of each laser beam (11, 12, 13, 14), i.e., the MVBG combined output laser (15), behaves independently from all the others, and with the correct orientation, it is possible to align them, combining the beams efficiently as suggested in said figure.

A shaping element (20) may then steer, reshape, or perform other changes to the MVBG combined output laser beam (15), such as increasing its divergence and directing it towards the region of interest on the road. This shaping element (20) can be static or otherwise steerable, with a motorized mirror being able to scan the road, for example.

The embodiments herein disclosed in this invention assume that the MVBG (10) operates in reflection, which means that diffracted beams (15) combine and propagate back into the same hemisphere as the incident ones. Different embodiments of the invention not disclosed here are also possible using MVBG (10) in transmission. In this case, the diffracted beams (15) combine and propagate into a hemisphere opposite to the direction of the incident beams (11, 12, 13, 14). The possibility to use the MVBG (10) in either transmission or reflection is defined by the parameters of the periodic modulation of the refractive index, namely the period and tilt.

Some practical examples are illustrated in Figures 3 through 6, where four laser emitting diodes, only laser emitting diode C (3) and laser emitting diode D (4) are visually illustrated, with temperature control are arranged in a Printed Circuit Board (60). Note some parts are invisible in order to see the working principle inside of the device (1). The developed device (1) is built around a support frame (40) with high thermal conductivity, providing both mechanical stability for the optical alignment and a temperature-controlled heat reservoir for the laser emitting diodes (3, 4) and optical elements (10, 20). Such high thermal conductivity is achieved by a proper choice of the material and geometry of the parts. A thermal system (50), which may be simply a passive cooling element (e.g., frame with fins), thermal dissipator connected to a fan or an active thermo-electric cooler device, keeps the temperature of the frame (40) at a relatively constant and stable value. Temperature stability is typically required as the Bragg condition of the MVBGs is affected by such parameter. The laser beams (11, 12, 13, 14) are connected to a PCB (60) to which is attached in a mechanical way the sensor housing (70). The beam-shaping element (20) is responsible for the modification of the combined laser beams (15) into a target shape and possibly to dynamically steer the combined beam (15) into different locations. In figures 3 and 4, the beam shaping element (20) shapes the combined beam (15) while reflecting it (reflective beam shaping elements), whereas in figures 5 and **6****,** the beam (15) is shaped while propagating through the element (transmissive beam shaping elements). Spherical, parabolic or cylindrical mirrors and reflective diffractive optical elements are examples of static reflective beam shaping elements (20), whilst oscillating mirrors are examples of dynamic reflective shaping elements that can steer the combined beam (15) to different locations. As concerns transmissive beam shaping elements (20), examples of such elements include static and/or tunable lenses and transmissive diffractive optical elements.

In the particular embodiment of Figure 3, the laser emitting diode A installed on one of the side surfaces of the support frame (40) conveys a laser beam A (11) diagonally oriented with a predetermined angle A towards a central point of the MVBG (10), and similarly, the laser emitting diode B, installed along on the same side surface of the support frame (40) as the emitting diode A, conveys a laser beam B (12) diagonally oriented towards the central point of the MVBG (10) with a different angle B. In a similar way, the laser emitting diode C (3) is installed on one of the side surfaces of the support frame (40), in this particular case in the opposite surface of the squared device enclosure, conveys a laser beam C (11) diagonally oriented with a predetermined angle C towards the central point of the MVBG (10), and, the laser emitting diode D (4), installed along on the same side surface of the support frame (40) as the emitting diode C (3), conveys a laser beam D (12) diagonally oriented towards the central point of the MVBG (10) with a different angle D. The result of the four incident beams (11, 12, 13, 14) on the central point of the MVBG (10), which is strategically installed in a lateral perpendicular position with regard to the diode installation surfaces, is a beam (15) that uniquely combines all the characteristics of the incident light sources, which may or may not be of different wavelengths with a determined shape and orientation. As depicted in Figure 3, in this proposed embodiment, the resulting beam (15), perpendicular to the MVBG (10) surface, will then propagate towards a shaping element (20), installed in a opposite parallel surface of the support frame (40), being responsible for correctly conducting the resulting shaped combined beam (23) to the outside of the enclosure of the support frame (40), by an existing lower opening located in the sensor housing (70). As previously mentioned, the shaping element (20) can be dynamic, for example an oscillating mirror or a tunable lens, and for the particular case of Figure 3, the shaping element (20) is a convex mirror, which redirects the combined beam outside of the enclosure with a certain amount of divergence.

Based on the same construction concept, the example in figure 4 depicts another possible embodiment of the present invention, comprising the linear installation of the four emitter diodes on the same surface of the support frame (40) side by side, each diode conveying its respective laser beam (11, 12, 13, 14) focused on a central point of the MVBG (10), installed parallelly in front of that support frame (40) surface, which will produce a perpendicular combined output laser beam (15) focused on the shaping element (20), installed in the opposite surface of the enclosure support frame (40), which will further direct the resulting shaped combined beam (23) to the outside of the enclosure through the sensor housing (70) placed on the bottom of the support frame (40).

Again, in Figure 5 it is possible to verify a similar arrangement as the one proposed in Figure 4. However, in this embodiment, the MVBG (10) is placed perpendicularly to the support frame (40) surface where the emitter diodes are installed, instead of being placed front-to-front, conveying the resulting combined output laser beam (15) outside the enclosure through the existing opening in the sensor housing (70) placed on the bottom of the enclosure in an opposite parallel positioning with regard to the MVBG (10). In this particular case, the beam shaping element (20), is embedded in the sensor housing (70).

Finally, Figure 6 is again very similar to the proposed embodiment depicted in Figure 5 and Figure 3. Here, the laser emitting diode A installed on one of the side surfaces of the support frame (40) conveys a laser beam A (11) diagonally oriented with a predetermined angle A towards a central point of the MVBG (10), and similarly, the laser emitting diode B, installed along on the same side surface of the support frame (40) as the emitting diode A, conveys a laser beam B (12) diagonally oriented towards the central point of the MVBG (10) with a different angle B. In a similar way, the laser emitting diode C (3) is installed on one of the side surfaces of the support frame (40), in this particular case in the opposite surface of the squared device enclosure, conveys a laser beam C (11) diagonally oriented with a predetermined angle C towards the central point of the MVBG (10), and, the laser emitting diode D (4), installed along on the same side surface of the support frame (40) as the emitting diode C (3), conveys a laser beam D (12) diagonally oriented towards the central point of the MVBG (10) with a different angle D. The result of the four incident beams (11, 12, 13, 14) on the central point of the MVBG (10), which is strategically installed in an upper perpendicular position with regard to the diode installation surfaces, is a beam (15) that uniquely combines all the characteristics of the incident light sources, which may or may not be of different wavelengths with a determined shape and orientation. As depicted in Figure 6, in this proposed embodiment, the resulting beam (15), perpendicular to the MVBG (10) surface, will then be channeled to the shaping element (20), which is embedded on a opposite parallel surface on the sensor housing (70).

## Claims

1. Optical beam combiner road condition sensor (1) comprising
a set of laser emitting diodes, configured to emit corresponding independent laser beams (11, 12, 13, 14); **characterized in that** the optical beam combiner road condition sensor further comprises
a diffraction grating arranged inside an enclosure
along with the set of laser emitting diodes;
the diffraction grating comprising a Multiplexed Volume Bragg Grating, MVBG (10), whereto the emitted independent laser beams (11, 12, 13, 14) having different wavelengths are oriented at respective predetermined angles (A, B, C, D) towards a central position of the MVBG (10), said MVBG (10) enabling a reflection of a combined output laser beam (15) towards a shaping element (20) which will channel a resulting shaped combined beam (23) towards an existing target outside of the enclosure, said target being a road, in order to determine the road environmental conditions.

2. Optical beam combiner road condition sensor (1) according to the previous claim, comprising a support frame (40) with high thermal conductivity characteristics through which the set of laser emitting diodes are supported.

3. Optical beam combiner road condition sensor (1) according to previous claim 2, comprising a thermal system (50) configured to maintain the temperature of the support frame (40) at a constant and stable value.

4. Optical beam combiner road condition sensor (1) according to previous claims 2 and 3, wherein the support frame (40) is mechanically connected to sensor housing (70), which is connected to a PCB (60).

5. Optical beam combiner road condition sensor (1) according to any of the previous claims, wherein the set of laser emitting diodes are arranged along at least one lateral support frame (40).

6. Optical beam combiner road condition sensor (1) according to previous claims 2, 3 and 4, wherein the MVBG (10) is positioned inside the enclosure in a perpendicular position or in a parallel position with regard to the location of the support frame (40).

7. Optical beam combiner road condition sensor (1) according to any of the previous claims, wherein the shaping element (20) is positioned inside of the enclosure in a perpendicular position or in a parallel position with regard to the location of the MVBG (10), or embedded in the sensor housing (70).

## Patentansprüche

1. Optischer Strahlkombinierer-Straßenzustandssensor (1), der eine Anordnung von Laserdioden umfasst, die so konfiguriert sind, dass sie entsprechende unabhängige Laserstrahlen (11, 12, 13, 14) aussenden;
**dadurch gekennzeichnet, dass** der optische Strahlkombinierer-Straßenzustandssensor ferner umfasst
ein Beugungsgitter, das zusammen mit dem Satz Laser emittierender Dioden
in einem Gehäuse angeordnet ist;
das Beugungsgitter umfasst ein Multiplexed Volume Bragg Grating, MVBG (10), wobei die emittierten unabhängigen Laserstrahlen (11, 12, 13, 14) mit unterschiedlichen Wellenlängen in jeweiligen vorgegebenen Winkeln (A, B, C, D) ausgerichtet sind in Richtung einer zentralen Position des MVBG (10), wobei das MVBG (10) eine Reflexion eines kombinierten Ausgangslaserstrahls (15) in Richtung eines Formelements (20) ermöglicht, das einen resultierenden geformten kombinierten Strahl (23) in Richtung eines vorhandenen Ziels außerhalb des Gehäuses leitet, wobei das Ziel eine Straße ist, um die Straßenumgebungsbedingungen zu bestimmen.

2. Optischer Strahlkombinierer-Straßenzustandssensor (1) nach dem vorhergehenden Anspruch, umfassend einen Stützrahmen (40) mit hohen Wärmeleitfähigkeitseigenschaften, durch den der Satz Laser emittierender Dioden getragen wird.

3. Optischer Strahlkombinierer-Straßenzustandssensor (1) nach dem vorhergehenden Anspruch 2, der ein thermisches System (50) umfasst, das so konfiguriert ist, dass es die Temperatur des Stützrahmens (40) auf einem konstanten und stabilen Wert hält.

4. Optischer Strahlkombinierer-Straßenzustandssensor (1) nach den vorhergehenden Ansprüchen 2 und 3, wobei der Stützrahmen (40) mechanisch mit dem Sensorgehäuse (70) verbunden ist, das mit einer Leiterplatte (60) verbunden ist.

5. Optischer Strahlkombinierer-Straßenzustandssensor (1) nach einem der vorhergehenden Ansprüche, wobei der Satz laseremittierender Dioden entlang mindestens eines seitlichen Stützrahmens (40) angeordnet ist.

6. Optischer Strahlkombinierer-Straßenzustandssensor (1) nach den vorhergehenden Ansprüchen 2, 3 und 4, wobei der MVBG (10) innerhalb des Gehäuses in einer senkrechten Position oder in einer parallelen Position in Bezug auf die Position des Stützrahmens (40) positioniert ist.

7. Optischer Strahlkombinierer-Straßenzustandssensor (1) nach einem der vorhergehenden Ansprüche, wobei das Formelement (20) innerhalb des Gehäuses in einer senkrechten Position oder in einer parallelen Position in Bezug auf die Position des MVBG (10) positioniert ist oder in das Sensorgehäuse (70) eingebettet.

## Revendications

1. Capteur d'état de la route à combineur de faisceaux optiques (1) comprenant un ensemble de diodes émettrices laser, configurées pour émettre des faisceaux laser indépendants correspondants (11, 12, 13, 14) ;
**caractérisé en ce que** le capteur d'état de la route à combineur de faisceaux optiques comprend en outre
un réseau de diffraction disposé à l'intérieur d'une enceinte conjointement
avec l'ensemble de diodes émettrices laser ;
le réseau de diffraction comprenant un réseau de Bragg en volume multiplexé, MVBG (10), vers lequel les faisceaux laser indépendants émis (11, 12, 13, 14) ayant des longueurs d'onde différentes sont orientés selon des angles prédéterminés respectifs (A, B, C, D) en direction d'une position centrale du MVBG (10), ledit MVBG (10) permettant une réflexion d'un faisceau laser de sortie combiné (15) vers un élément de mise en forme (20) qui canalisera un faisceau combiné mis en forme résultant (23) vers une cible existante à l'extérieur de l'enceinte, ladite cible étant une route, afin de déterminer les conditions environnementales de la route.

2. Capteur d'état de la route à combineur de faisceaux optiques (1) selon la revendication précédente, dans lequel il comprend un cadre de support (40) présentant des caractéristiques de conductivité thermique élevée, par l'intermédiaire duquel l'ensemble de diodes émettrices laser est supporté.

3. Capteur d'état de la route à combineur de faisceaux optiques (1) selon la revendication 2 précédente, dans lequel il comprend un système thermique (50) configuré pour maintenir la température du cadre de support (40) à une valeur constante et stable.

4. Capteur d'état de la route à combineur de faisceaux optiques (1) selon les revendications 2 et 3 précédentes, dans lequel le cadre de support (40) est relié mécaniquement au boîtier du capteur (70), lequel est relié à une PCB (60).

5. Capteur d'état de la route à combineur de faisceaux optiques (1) selon l'une quelconque des revendications précédentes, dans lequel l'ensemble de diodes émettrices laser est disposé le long d'au moins un cadre de support latéral (40).

6. Capteur d'état de la route à combineur de faisceaux optiques (1) selon les revendications 2, 3 et 4 précédentes, dans lequel le MVBG (10) est positionné à l'intérieur de l'enceinte dans une position perpendiculaire ou dans une position parallèle par rapport à l'emplacement du cadre de support (40).

7. Capteur d'état de la route à combineur de faisceaux optiques (1) selon l'une quelconque des revendications précédentes, dans lequel l'élément de mise en forme (20) est positionné à l'intérieur de l'enceinte dans une position perpendiculaire ou dans une position parallèle par rapport à l'emplacement du MVBG (10), ou intégré dans le boîtier du capteur (70).
